# EUROPEAN PATENT APPLICATION

(11) **EP 1 708 366 A1**
(43) Date of publication of application: **04.10.2006**
(21) Application number: 05102300.0
(22) Date of filing: 22.03.2005
(51) Int. Cl.: H03M 7/46

(54) **A data compressor with value range detection**

(71) Applicant: Agilent Technologies Inc, Palo Alto, CA 94303-0870 (US)
(72) Inventor: Klein, Frank, 71032 Böblingen (DE)
(74) Representative: Neuerburg, Gerhard

(57) **Abstract**

The present invention relates to a data compressor (10) with value range detection, comprising: a decision unit (14) receiving a digital signal (12) and adapted for deciding whether a value of the digital signal (12) lies in at least one value range and generating an output signal (16) indicating whether the value lies in the at least one value range or not, and a processing unit (20) receiving the digital signal (12) and adapted for processing values of the digital signal (12) in that it increments a counter (15) as long as the output signal (16) indicates that the values lie in the at least one value range, and that it determines an approximated value of the values, outputs the approximated value together with the count of the counter (15), and resets the counter (15), if the output signal (16) indicates that a value does not lie in the at least one value range.

## Description

### BACKGROUND ART

The present invention relates to a data compressor with value range detection.

In applications such as remote management, a digital signal is transmitted from a local data processing unit to a remote data processing unit. The bandwidth available for transmission determines the data rate. The digital signal can be compressed in a remote management unit- RMU - for remote managing the local data processing unit before it is transmitted to the remote data processing unit. The remote data processing unit decompresses the received signal for further processing, e.g., for displaying video data contained in the received signal.

The compression rate depends on a number of characteristics of the digital signal. For loss less data compression, run length encoding - RLE - can be used. RLE is a simple and efficient compression method if the data to be compressed contains a large number of successive identical values. RLE may not be efficient if the data to be compressed is similar to noise, i.e., mainly contains varying values. An example for such data is a digital signal containing disturbances like high frequency or quantization noise, low frequency ripple, reflections or spikes. Also, other loss less compression methods based on similar repeating patterns in such a digital signal may also not be efficient, according to missing similarities due to noise.

For applying RLE, a low pass can be used to eliminate high frequency disturbances from a digital signal. However, this kind of filtering usually causes a significant loss of information contained in the digital signal. Particularly, when the digital signal contains video data, this results in a reduced video quality, e.g., causes fuzzy edges in the pictures represented by the video data. More sophisticated filtering methods require more computing power, which is costly and often not available, particularly in RMUs.

### DISCLOSURE OF THE INVENTION

It is an object of the invention to provide an improved data compressor and data compression method with value range detection. The object is solved by the independent claims. Preferred embodiments are shown by the dependent claims.

A basic idea of the invention is to compress a digital signal containing disturbances by replacing similar values with an approximated value and the number of the similar values. Although some information gets lost during this compression, the loss may be compensated by a significantly improved compression compared to a simple RLE. The invention may be particularly suited for the compression of a digital signal containing video data. In this case, the information loss due to the approximation hardly influences the visible data. Further, the invention allows to efficiently remove disturbances like noise and, thus, to improve the quality of video data contained in the compressed signal. Also, with the invention, reflections and overshoots contained in the digital signal can be removed or at least efficiently suppressed without requiring a separate filter stage. Finally, a digital signal compressed in accordance with the invention can be further compressed by a RLE since due to the approximation small differences between successive values of the digital signal are removed so that the input data for the RLE contain less disturbances. The invention also allows to faster generate a color table in case of a digital signal containing video data with color information.

According to a first embodiment of the present invention, a data compressor with value range detection, wherein the value range comprises a plurality of successive numerical values forming a subset of the complete possible value range, comprises: a decision unit receiving the digital signal and adapted for deciding whether a value of the digital signal lies in a value range and generating an output signal indicating whether the value lies in the value range or not, and a processing unit receiving the digital signal and adapted for processing values of the digital signal in that it increments a counter as long as the output signal indicates that the values lie in the value range, and that it determines an approximated value of the values, outputs the approximated value together with the count of the counter, and resets the counter, if the output signal indicates that a value does not lie in the value range.

In a preferred embodiment, the data compressor further comprises a value range adjusting unit adapted for adjusting the value range implemented in the decision unit in response to the output signal. This allows to adapt the value range to different value ranges of the digital signal.

Particularly, the value range adjusting unit may be adapted for adjusting the value range if the output signal of the decision unit indicates that a value does not lie in the value range. Thus, the value range can be tracked in accordance with the values of the digital signal.

Several strategies may be applied for processing the approximated value. For example, the processing unit may be adapted to determine one of the successive values lying in the value range as the approximated value. Alternatively, the processing unit may be adapted to calculate the mean value of at least two of the successive values lying in the value range and to determine the mean value as the approximated value. Or, the processing unit may be adapted to determine the value with the largest frequency of the successive values lying in the value range as the approximated value.

In a preferred embodiment of the invention, the value range may be defined by a first threshold and a second threshold larger than the first threshold. Thresholds may be costly implemented in soft- or hardware. Furthermore, they are easily adjustable by the value range adjusting unit.

In an embodiment, the difference between the first and second threshold is predetermined and depending on disturbances contained in the digital signal and an available transmission bandwidth. For example, the difference may be programmed depending on the maximum data rate of a network over which the compressed digital signal is transmitted, e.g., whether the network is a LAN (local area network) or an internet connection via DSL (digital subscriber line).

The value range adjusting unit may be adapted to determine the value range if the difference of at least two successive values is smaller than a predetermined difference. Particularly, this may be important at initialization of the data compressor. During this phase, the value range usually cannot be optimally adjusted since the first value of the digital signal is not yet known by the data compressor. Therefore, it may be efficient to await the first values of the digital signal, and to determine the value range if the difference of two successive values is smaller than the predetermined difference.

In a further embodiment, the digital signal may contain video data comprising color information, and the data compressor may comprise a color table for storing the color information contained in the video data and for each stored color information the number of pixels of the video data which have a similar color information. This allows a faster generation of a color table compared to the generation of a histogram of the video data and a color table with the most frequent colors according to the histogram.

According to a further embodiment, a data compressor for compressing a digital signal containing video data with color information is provided, comprising a color compression unit receiving the digital signal and adapted for detecting successive pixels with similar (or equal) color information contained in the digital signal, a counter controlled by the color compression unit and provided for counting the number of the pixels detected by the color compression unit to have a similar (or equal) color, a color table controlled by the color compression unit and provided for storing a color information contained in the digital signal, wherein the color compression unit is further adapted to look for color information stored in the color table and close to the color information of the detected pixels, and to decide whether to replace the color information of the detected pixels with one color information from the close color information found in the color table, or to store the color information and the number of pixels of the detected pixels in the color table as new color information.

The color compression unit may be adapted to detect successive pixels with similar color information contained in the digital signal if the color information of the successive pixels lies within a predefined color range. Alternatively, the color compression unit may be adapted to detect successive pixels with similar color information contained in the digital signal if the difference of the color information of two successive pixels is smaller than a predefined value.

The color compression unit may be further adapted to look for the color information with the largest frequency stored in the color table and close to the color information of the detected pixels. Thus, small color differences may be suppressed since similar color information is usually replaced with the most frequent color information close to the similar color information.

In an embodiment, a further run length encoding unit may be provided, which receives digital data from the color compression unit, and which is adapted to perform a run length compression of the received digital data. Thus, a more efficient compression of the digital signal may be achieved.

According to a further embodiment of the invention, a data compressor with value range detection for compressing a digital signal containing video data with color information is provided, comprising a first data compressor according to the first embodiment of the invention and provided for performing a first compression of the digital signal, and a second data compressor according to a second embodiment of the invention and provided for performing a second compression of the digital signal after the first compression. Thus, a highly efficient compression of a digital signal containing video data with color information can be obtained. This is particularly of advantage for applications such as transmission of video data such as screen contents of a computer display over networks with a limited bandwidth.

A further embodiment of the invention relates to a remote management unit - RMU - adapted for managing a local data processing unit - DPU - from remote by a remote DPU, the RMU being adapted to be coupled to the remote DPU by means of a network external with respect to the local DPU. The RMU is coupled with the local DPU through an internal bus of the local DPU and adapted to receive an analog video signal from a graphics unit of the local DPU. The RMU comprises an analog to digital converter for converting the received analog video signal in a digitized analog signal and the data compressor according to one or more embodiments of the invention in order to compress the digitized analog signal before transmitting it over the network to the remote DPU.

In a further embodiment of the invention, a data processing unit- DPU - is provided, which is adapted for coupling to a network and contains a remote management unit - RMU - according to an embodiment of the invention for remotely controlling the DPU over the network.

A further embodiment of the invention relates to a data compression method with value range detection, comprising the following steps: receiving a digital signal and deciding whether a value of the digital signal lies in a value range and generating an output signal indicating whether the value lies in the value range or not, adjusting the value range in response to the output signal, processing values of the digital signal by incrementing a counter as long as the output signal indicates that the values lie in the value range, and processing an approximated value of the values, storing the approximated value together with the count of the counter, and resetting the counter, if the output signal indicates that a value does not lie in the value range.

According to yet a further embodiment, a data compression method for compressing a digital signal containing video data with color information is provided, comprising the following steps: receiving the digital signal and detecting successive pixels with similar color information contained in the digital signal, counting the number of the pixels detected by the color compression unit to have a similar color, looking for stored color information and close to the color information of the detected pixels, and deciding whether to replace the color information of the detected pixels with one color information from the found close color information, or to store the color information and the number of pixels of the detected pixels as new color information.

Embodiments of the invention can be partly or entirely embodied or supported by one or more suitable software programs, which can be stored on or otherwise provided by any kind of data carrier, and which might be executed in or by any suitable data processing unit. Software programs or routines are preferably applied by a processor of a RMU, executing a program implementing an embodiment of the invention.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows an embodiment of a data compressor with value range detection according to the invention, for compression digital data of an analog video signal;

Fig. 2 shows an embodiment of a DPU according to the invention, containing a RMU with a data compressor according to the invention, wherein the DPU is connected over a network with a remote DPU;

Fig. 3 shows the course of an exemplary analog video signal and digital samples of this signal and value ranges for compressing the digital samples according to the invention;

Fig. 4 shows a flow chart of an embodiment of a method for compressing digital data according to the invention;

Fig. 5 shows a further embodiment of a data compressor with value range detection according to the invention, for compression digital data of an analog video signal comprising color information; and

Fig. 6 shows a further embodiment of a data compressor according to the invention, for compression digital data of an analog video signal comprising color information, containing a first and a second data compressor in order to achieve high compression.

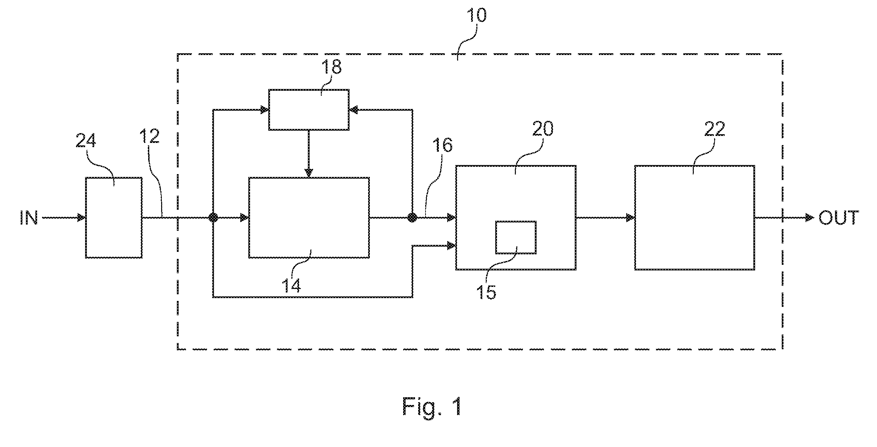

Fig. 1 shows a data compressor 10 for compressing digital data 12 which may be implemented in hardware, e.g., as an ASIC (Application Specific Integrated Circuit), or in software, which is processed by a processor. In the latter case, the units of the data compressor 10 of Fig. 1, the functions of which are described in the following in detail, may be implemented as functions, procedures, or objects in a high level programming language such as C or C++. Typically, the preferred implementation depends on the required processing speed. This means that a software implementation performed by a standard microprocessor may be sufficient for a medium data rate, whereas a hardware implementation may be required in case of a high data rate, e.g., digital data from an analog video signal with a high frequency such as a computer display with a high resolution of 1042x768 pixel, true color palette, and a refresh frequency of 75 Hz.

The digital data 12 is generated by an analog to digital converter 24 which receives an analog signal, e.g., an analog video signal. The digital data 12 may contain a lot of disturbances such as high frequency noise, low frequency hum, reflections, overshoots, etc. The analog to digital conversion generates as a further disturbance quantization noise in the digital signal 12. These disturbances principally reduce the efficiency of loss less compression methods like a RLE of the digital signal 12.

The data compressor 10 comprises a decision unit 14, which is adapted to decide whether each of the received values of the digital signal 12 lies in a predefined value range. The predefined value range is implemented in the decision unit by a first threshold, and a larger, second threshold. The decision unit 14 compares each value with both of the thresholds. If a value is larger than the first, but smaller than the second threshold, the decision unit 14 decides that the value lies within the value range and generates an output signal 16 indicating that a value lies within the predefined value range.

The thresholds are adjustable so that the value range can be adjusted. For adjusting the value range, a value range adjusting unit 18 receiving the digital signal 12 and the output signal 16 of the decision unit 14 is provided. The value range adjusting unit 18 is adapted to adjust the value range in the decision unit depending on the received output signal 16 and the digital signal 12. If the output signal 16 indicates that a certain value of the digital signal does not lie within the predefined value range, the value range adjusting unit 18 analyses the values subsequent to the certain value, and adjusts the predefined value range by altering the thresholds in the decision unit so that the first one of the subsequent values lies within the adjusted value range.

At initialization, i.e., when the data compressor 10 receives the first values of the digital signal 12, the value range adjusting unit 18 analyses the received values before adjusting the predefined value range. After an initialization period, the value range adjusting unit 18 adjusts the value range in order to enable compressing the digital signal 12. After the initial adjustment of the value range, a further adjustment is triggered by the output signal 16, i.e., if the output signal 16 indicates that a value does not lie within the value range as described above.

The data compressor 10 further comprises a processing unit 20, which receives the output signal 16 from the decision unit 14 and the digital signal 12. The processing unit 20 contains a counter 15, which is incremented as long as the output signal 16 indicates that the values of the digital signal 12 lie in the value range. The received values of the digital signal 12 are temporarily stored in the processing unit 20. When the output signal 16 of the decision unit 14 indicates that a value does not lie in the value range, the processing unit 20 processes an approximated value of the temporarily stored values. One method for processing an approximated value may be the calculation of the mean value of at least two successive of the temporarily stored values. Another one may be taking the value with the largest frequency of the temporarily stored values lying in the value range as the approximated value.

The processing unit 20 stores the approximated value together with the count of the counter 15 in memory means, and resets the counter 15. As long as the output signal 16 of the decision unit 14 indicates that a value does not lie in the value range, the processing unit 20 does not increment the counter 15 and directly stores the received value in the memory means 22. In this case, the digital signal 12 is not compressed.

In the following, the application of the data compressor according to the invention in a RMU for compressing digital video data is described in detail.

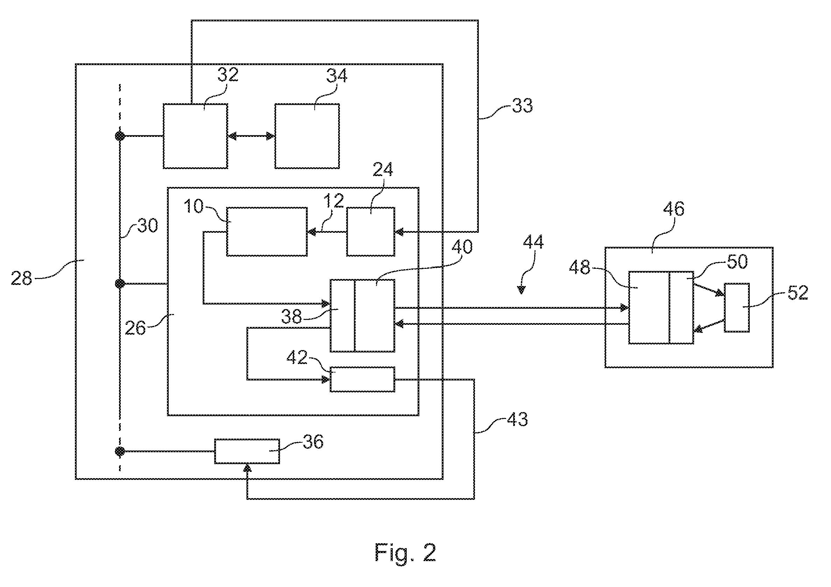

In Fig. 2, a managed server 28 is connected over a network 44, typically a LAN (local area network) or WAN (wide area network) connection, with a client computer 46. The client computer 46 is a remote data processing unit for remotely operating the server 28, including set-up, operating system and application installation, as well as system maintenance. In order to allow such a remote operation of the server 28, video data of the server is transmitted over the network 44 to the client computer 46 and displayed on a GUI 50 (graphical user interface), such as a window system, and displayed on an AVR (advanced video redirection) window 52 of the client computer 46. Furthermore, input data from the client computer 46, e.g., signals generated by a pointing device such as a mouse and a keyboard connected to the client computer, for operating the server 28 are transmitted from the client computer 46 to the managed server 28. In order to receive and send signals from or to the server 28, the client computer 46 comprises a client protocol and transceiver unit 48 connected to the network 44.

The server 28 may be controlled by a RMU 26 in the form of a PCI card, installed in a PCI slot of the server 28 and coupled to a PCI bus 30 of the server 28. Furthermore, the server 28 comprises a VGA graphics card 32 and an USB hub 36, which are also coupled to the PCI bus 30. The VGA graphics card 32 stores video data in a video memory 34. An analog output of the VGA graphics card 32 is connected with the input of an analog to digital converter 24 of the RMU 26. Thus, the RMU 26 receives an analog video signal 33 from the VGA graphics card 32 and converts it into a digital signal 12. The digital signal 12 is compressed by a data compressor 10, as described with reference to Fig. 1, implemented in the RMU 26. The compressed digital data is input to a web server 38 of the RMU 26. The web server 38 is connected to a server protocol and transceiver unit 40 of the RMU 26 for transmitting signals from the server 28 to the client computer 46 and for receiving signals from the client computer 46 over the network 44.

Furthermore, the RMU 26 comprises an USB functions unit 42 for receiving input data from the client computer 46 such as keyboard or pointing device input and generating corresponding USB signals 43 which are transmitted to the USB hub 36 as input data. Thus, the managed server 28 can be remotely operated by input data from the client computer 46. The web server 38 implemented in the RMU 26 allows an comfortable control of the managed server 28 from remote by the client computer 46. Thus, the management of the server 28 may be independent from an operating system installed on a hard disk of the server 28.

The compression of the video data sent form the server 28 to the client computer 46 over the network 44 by the data compressor has many advantages as less restrictive bandwidth requirements, a low network usage, and a faster video transmission to the client computer allowing a more efficient controlling of the server 28.

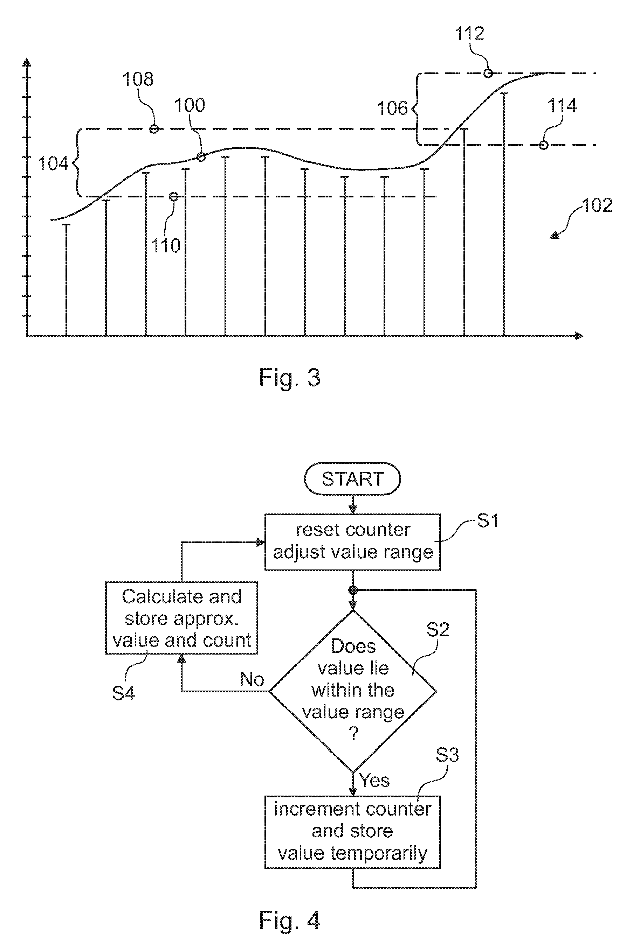

Fig. 3 shows an exemplary course of an analog video signal 100, e.g., as generated by the VGA graphics card 32 of the managed server 28. The analog to digital converter 24 of the RMU 26 samples the analog video signal 100, and converts each sample into a digital value 102. In order to efficiently compress the digital values 102 of the analog video signal, a first value range 104 according to the invention is defined by a first threshold 110 and a larger second threshold 108, as shown in Fig. 3. As long as the digital values lie within the first value range 104, the compression according to the invention counts the number of the values and temporarily stores an approximated value. When a value lies outside of the first value range 104 like the last value in Fig. 3, the value range is adjusted to a second value range 106 according to the invention. Furthermore, the approximated value is stored together with the count of the number of values lying in the first value range 104. The second value range 106 is again defined by two thresholds 112 and 114, forming a new value range in which the last value lies.

Fig. 4 shows a flow chart with the essential steps of a computer implementable embodiment of the method for data compression according to the invention. After starting the method, a counter is reset and a value range is adjusted depending on the a first received value of a digital signal or according to a predefined value range (step S1). In step S2, it is checked whether the value lies within the value range or not. If the value lies within the value range, the method jumps to step S3. In step S3, the counter is incremented and the value is temporarily stored for the later calculation of an approximated value. If the value lies outside the value range, the method jumps to step S4. In step S4, an approximated value of the temporarily stored values is calculated and stored together with the count of the counter. After step S4, the method continues with step S1, resets the counter and adjusts the value range. It is clear, that the above-described method may be further refined in order to be efficiently implemented by a computer.

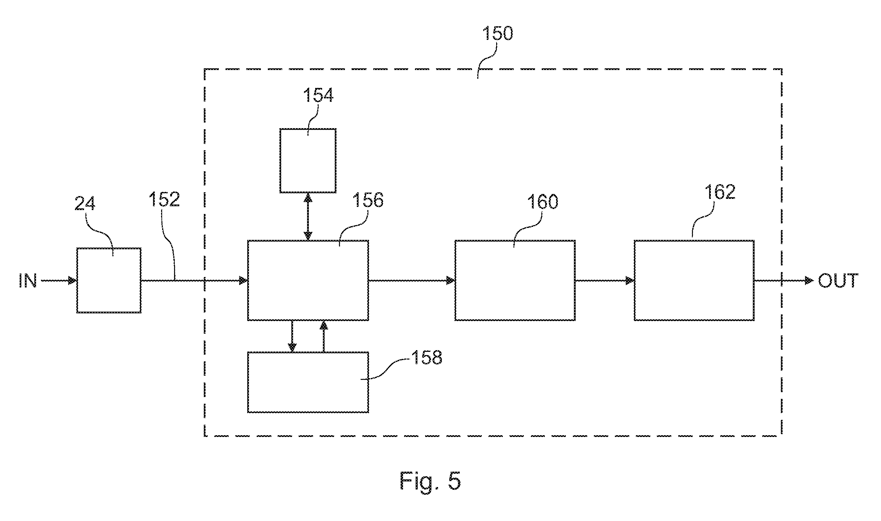

Fig. 5 shows a further embodiment of the data compressor according to the invention. This data compressor 150 is particularly provided for compressing a digital signal 152 containing video data with color information. The digital signal 152 is received from an analog to digital converter 24, which converts samples of an analog video signal IN received on its input into the digital signal 152. The output OUT of the data compressor is a compressed digital signal containing the video data with color information from the input signal IN.

The data compressor comprises a color compression unit 156, which receives the digital signal 152 and detects successive pixels with similar color information contained in the digital signal 152. Successive pixels with similar color information contained in the digital signal 152 are detected if the color information of the successive pixels lies within a predefined color range. The color compression unit 156 increments a counter 158 as long as it detects successive pixels with a similar color information. Thus, the counter 158 counts the number of the pixels detected by the color compression unit 156 having a similar color.

The color compression unit 156 further controls a color table 154 storing a color palette containing the most frequent color information of the digital signal. The color palette does not only contain the most frequent color information, but also the number of pixels of each color information. Thus, the color palette contains the most frequent color information of the digital signal 152 and the for each contained color information the number of pixels contained in the digital signal 152.

When the color compression unit 156 detects a pixel with a color information differing from the similar color information of preceding pixels, it looks for color information stored in the color table 154 close to the color information of the preceding pixels. If it founds several color information close to the color information of the preceding pixels, it looks for the one with largest frequency, i.e., it compares the number of pixels stored with each of the color information in the color table 154. Then, it decides whether to replace the similar color information of the preceding pixels with one color information from the close color information found in the color table 154, or to store the color information and the number of preceding pixels as counted by the counter 158 in the color table 154 as new color information. If it finds close color information, it chooses the one with the largest number of pixels as the color information representing the color information of the preceding pixels. If it does not find color information close to the color information of the preceding pixels, it saves the color information of the preceding pixels as new color information together with the pixel count of the counter 158 in the color table 154.

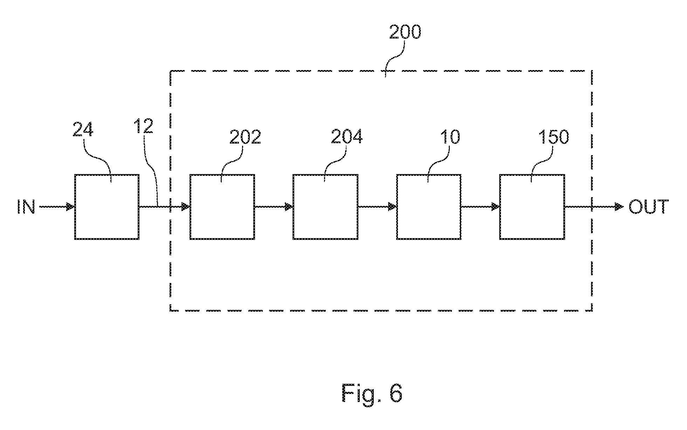

Fig. 6 shows a further data compressor 200 for compressing a digital signal containing video data with color information with two data compressors according to the invention. Two successive compressions of a digital signal 12 usually obtain a higher compression compared to a single compression.

The digital signal 12 input to the data compressor 200 is fed to a color reduction unit which reduces the number of colors contained in the signal, e.g., by transforming a true color information to a 256 color information. This may be done by mapping the true color information to the 256 color information according to a predefined mapping scheme.

After the color reduction, a CRC (Cyclic Redundancy Check) checksum is formed from the digital signal, to allow for latter checking the correct transmission of the digital signal. Then, the digital signal is compressed by a first data compressor 10, as described above and shown in Fig. 1. After the first compression, the first compressed digital signal is secondly compressed by a second data compressor 150, as described above and shown in Fig. 5.

## Claims

1. A data compressor (10) for determining reduced data out of successive values of a digital signal (12), comprising:
a decision unit (14) receiving a digital signal (12) and adapted for deciding whether a value of the digital signal (12) lies in at least one value range and
generating an output signal (16) indicating whether the value lies in the at least one value range or not, and
a processing unit (20) receiving the digital signal (12) and adapted for processing values of the digital signal (12) in that it increments a counter (15) as long as the output signal (16) indicates that successive values of the digital signal (12) lie in the at least one value range, and that it determines an approximated value of the values, stores the approximated value together with the count of the counter (15), and resets the counter (15), if the output signal (16) indicates that a value does not lie in the at least one value range.

2. The data compressor of claim 1, further comprising a value range adjusting unit (18) adapted for adjusting the at least one value range implemented in the decision unit (14) in response to the output signal (16).

3. The data compressor of claim 2, wherein the value range adjusting unit (18) is adapted for adjusting the value range if the output signal (16) of the decision unit indicates that a value does not lie in the at least one value range.

4. The data compressor of claim 1, or any of the above claims, wherein the processing unit (20) is adapted to determine one of the successive values lying in the at least one value range as the approximated value.

5. The data compressor of claim 1, wherein the processing unit (20) is adapted to calculate the mean value of at least two of the successive values lying in the at least one value range and to determine the mean value as the approximated value.

6. The data compressor of claim 1, wherein the processing unit (20) is adapted to determine the value with the largest frequency of the successive values lying in the at least one value range as the approximated value.

7. The data compressor of claim 1, or any of the above claims, wherein the value at least one range (104, 106) is defined by a first threshold (110,114) and a second threshold (108, 112) larger than the first threshold (110, 114).

8. The data compressor of claim 7, wherein the difference between the first and second threshold (110, 114, 108, 112) is predetermined and depending on disturbances, contained in the digital signal (102), and an available transmission bandwidth.

9. The data compressor of claim 1, or any of the above claims, wherein the value range adjusting unit (18) is adapted to determine the at least one value range if the difference of at least two successive values is smaller than a predetermined difference.

10. The data compressor of claim 1, or any of the above claims, wherein the digital signal (12) comprises video data with color information, and the data compressor (10) comprises a color table (154) adapted to store a set of different color information together with each an associated run length information and further adapted to store the approximated value together with the corresponding count as a new color information an associated run length information.

11. The data compressor of claim 10, that is further adapted to identify color information stored in the color table (154) close or equal to the color information of the counted values, and to decide whether to replace the color information of the counted values with one color information from the color information found in the color table (154), or to store the approximated value together with the corresponding count as a new color information and associated run length information.

12. A data compressor (10, 150) for determining reduced data out of successive values of a digital signal (152) comprising video data with color information, comprising:
a processing unit (156) adapted for receiving the digital signal (152) and for processing values of the digital signal (152) in that it counts successive values of the digital signal (152) that are similar or equal, and that is further adapted to identify a color information close or equal to the color information of the counted values out of a set of color information entries stored each associated with a run length information in a color table (154), and to decide on the base of a comparison of the count and the run length information associated to the identified color information of whether to keep or to replace the color information of the counted values with the identified color information from the color information found in the color table (154),

13. The data compressor of claim 12 that is further adapted to decide on the base of a comparison of the count and the run length information associated to the identified color information whether to store the color information and the count as new color information with associated run length information in the color table (154).

14. A data compressor (200) for compressing a digital signal (12) containing video data with color information, comprising a first data compressor (10) of any of the claims 1 to 11 provided for performing a first compression of the digital signal, and a second data compressor (150) of any of the claims 12 or 13 provided for performing a second compression of the digital signal after the first compression.

15. A remote management unit - RMU - (26) adapted for managing a local data processing unit - DPU - (28) from remote by a remote DPU (46), the RMU (26) being adapted to be coupled to the remote DPU (46) by means of a network (44) external with respect to the local DPU (28), wherein the RMU (26) is coupled with the local DPU (28) through an internal bus (30) of the local DPU (28) and adapted to receive an analog video signal (33) from a graphics unit (32) of the local DPU (28), and wherein the RMU (26) comprises an analog to digital converter (24) for converting the received analog video signal (33) in a digitized analog signal (12) and the data compressor (10) according to one of the above claims in order to compress the digitized analog signal (12) before transmitting it over the network (44) to the remote DPU (46).

16. A data processing unit - DPU - (28) adapted for coupling to a network (44) and containing a remote management unit - RMU - (26) of claim 15 for remotely controlling the DPU (28) over the network (44).

17. A method for data compression, comprising the following steps:
receiving successive values of a digital signal (12) and deciding for each
value whether it lies in a value range or not and generating an output signal (16) indicating whether the value lies in the value range or not,
incrementing a counter (15) if the output signal (16) indicates that a value lies in the value range, and
determining an approximated value of the values, storing the approximated value together with the count of the counter (15), and resetting the counter (15), if the output signal (16) indicates that a value does not lie in the value range.

18. The method of claim 16, wherein the color table keeps stored a set of different color information each together with a count information and wherein depending on the count it is decided to either determine the approximated value by choosing a color information from the color table that is close to the values of the received digital signal (12) or to store the color information together with the count as a new color information.

19. A software program or product, preferably stored on a data carrier, for executing the method of claim 17 or 18, when run on a data processing system such as a computer.
